(19) Europäisches Patentamt
European Patent Office
Office européen des brevets

(11) **EP 1 881 444 B1**

(12) **EUROPEAN PATENT SPECIFICATION**

(45) Date of publication and mention
of the grant of the patent:
**04.05.2011 Bulletin 2011/18**

(51) Int Cl.:
***G06K 9/64*** (2006.01)

(21) Application number: **07020623.0**

(22) Date of filing: **28.03.2002**

(54) **Pattern collation device and pattern collating method thereof, and pattern collating program**

Gerät, Verfahren und Programm zum Vergleichen von Mustern

Dispositif de collecte de motifs et son procédé de collecte de motifs et programme de collecte de motifs

(84) Designated Contracting States:
**DE FR GB IT NL SE**

(30) Priority: **29.03.2001 JP 2001096223**

(43) Date of publication of application:
**23.01.2008 Bulletin 2008/04**

(62) Document number(s) of the earlier application(s) in
accordance with Art. 76 EPC:
**02007179.1 / 1 248 226**

(73) Proprietor: **NEC Corporation
Minato-ku
Tokyo 108-8001 (JP)**

(72) Inventor: **Monden, Akira
Tokyo (JP)**

(74) Representative: **Glawe, Delfs, Moll
Patent- und Rechtsanwälte
Postfach 26 01 62
80058 München (DE)**

(56) References cited:
**WO-A-98/10370**

• **COX G S ET AL: "A survey of point pattern matching techniques and a new approach to point pattern recognition" COMMUNICATIONS AND SIGNAL PROCESSING, 1992. COMSIG '92., PROCEEDINGS OF THE 1992 SOUTH AFRICAN SYMPOSIUM ON CAPE TOWN, SOUTH AFRICA 11 SEPT. 1992, NEW YORK, NY, USA,IEEE, US, 1992, pages 243-248, XP010106385 ISBN: 0-7803-0807-7**
• **CHENG F: "Point pattern matching algorithm invariant to geometrical transformation and distortion" PATTERN RECOGNITION LETTERS, NORTH-HOLLAND PUBL. AMSTERDAM, NL, vol. 17, no. 14, 30 December 1996 (1996-12-30), pages 1429-1435, XP004017158 ISSN: 0167-8655**
• **BROWN L G: "A SURVEY OF IMAGE REGISTRATION TECHNIQUES" ACM COMPUTING SURVEYS, NEW YORK, NY, US, vol. 24, no. 4, 1 December 1992 (1992-12-01), pages 325-376, XP000561460 ISSN: 0360-0300**

**Description**

BACKGROUND OF THE INVENTION

FIELD OF THE INVENTION

The present invention relates to collation of image data and, more particularly, to a pattern collation device for identifying linear graphic forms such as fingerprints and characters and a pattern collating method thereof, and a pattern collation program.

DESCRIPTION OF THE RELATED ART

As conventional devices for recognizing linear image patterns such as fingerprints and characters, the techniques are proposed in Japanese Patent Laying-Open (Kokai) No. Heisei 10-240932 and Japanese Patent Laying-Open (Kokai) No. Heisei 10-105703 in which using features points such as an end point and a branch point of a line, corresponding feature points are obtained and overlapped with each other for comparison.

Conventional techniques in which deformation of a graphic form is corrected to compare images have been proposed in Japanese Patent Laying-Open (Kokai) No. Heisei 02-187885, Japanese Patent Laying-Open (Kokai) No. Heisei 05-081412, Japanese Patent Laying-Open (Kokai) No. Heisei 06-004671, Japanese Patent Laying-Open (Kokai) No. Heisei 08-030783 and Japanese Patent Laying-Open (Kokai) No. Heisei 08-147411.

The conventional art, however, has the following shortcomings.

The conventional techniques recited in Japanese Patent Laying-Open No. Heisei 10-240932 and Japanese Patent Laying-Open No. Heisei 10-105703 have a problem that because the techniques employ a system of comparing graphic forms which are overlapped with each other as a whole, in such a case where a character is deformed or a fingerprint is deformed at the time of fingerprinting, the patterns can not be properly discriminated.

On the other hand, according to the conventional techniques recited in Japanese Patent Laying-Open No. Heisei 02-187885, Japanese Patent Laying-Open No. Heisei 05-081412, Japanese Patent Laying-Open No. Heisei 06-004671, Japanese Patent Laying-Open No. Heisei 08-030783 and Japanese Patent Laying-Open No. Heisei 08-147411, even when a graphic form is deformed, if the graphic form has the same deformation as a whole, correcting the deformation of the graphic form as a whole and comparing the same enables such a form to be coped with. However, in a case where each part has a different manner of deformation, an allowable difference should be increased to result in having inaccurate discrimination.

The article "Fingerprint image matching by minimization of thin-plate energy using a two-step algorithm with auxiliary variables" by Almansa and Cohen (2000; XP-001165715) discloses a pattern relating method according to the preamble of claim 1.

"A new Algorithm for Non-Rigid Point Matching" by Chui and Rangarajan discloses an algorithm which utilizes the softassign for the correspondence and the thin-plate spline for the non-rigid mapping.

SUMMARY OF THE INVENTION

An object of the present invention is to solve the above-described conventional problems and provide a linear graphic form pattern collation device which is capable of strictly discriminating an applied graphic form even when it is deformed and a pattern collating method thereof, and a pattern collation program.

This object is achieved by a pattern collation device according to claim 1, a pattern collating method according to claim 2 and a pattern collation program according to claim 3, respectively.

Even when a graphic form to be examined is deformed, the present invention enables the graphic form to be examined which is a graphic form as an object of examination and a model graphic form which is a graphic form based on which comparison is made to be strictly discriminated from each other by estimating deformation generated in the graphic form to be examined based on applied feature point information of the graphic form to be examined and applied feature point information of the model graphic form, correcting the estimated deformation and comparing the graphic form to be examined whose deformation has been corrected and the model graphic form to calculate similarity therebetween.

Other objects, features and advantages of the present invention will become clear from the detailed description given herebelow.

**BRIEF DESCRIPTION OF THE DRAWINGS**

The present invention will be understood more fully from the detailed description given herebelow and from the accompanying drawings of the preferred embodiment of the invention, which, however, should not be taken to be limitative to the invention, but are for explanation and understanding only.

In the drawings:

Fig. 1 is a block diagram showing a structure of a pattern collation device according to a first embodiment of the present invention;

Fig. 2 is a flow chart for use in explaining processing of pattern collation according to the first embodiment of the present invention;

Fig. 3 is a flow chart for use in explaining processing of a deformation estimating unit according to the first embodiment of the present invention;

Fig. 4 is a diagram showing a list of feature point pairs for deformation estimation of one embodiment of the present invention;

Fig. 5 is a diagram showing a model graphic form according to one embodiment of the present invention;

Fig. 6 is a diagram showing a graphic form to be examined according to one embodiment of the present invention;

Fig. 7 is a diagram showing a state where the model graphic form and the graphic form to be examined are overlapped with each other according to one embodiment of the present invention;

Fig. 8 is a diagram showing feature point pairs in the model graphic form and the graphic form to be examined according to one embodiment of the present invention;

Fig. 9 is a diagram showing a state where a model graphic form subjected to estimated deformation and the graphic form to be examined are overlapped with each other according to one embodiment of the present invention;

Fig. 10 is a diagram showing a state where the model graphic form shifted and the graphic form to be examined are overlapped with each other according to one embodiment of the present invention;

Fig. 11 is a diagram showing feature point pairs in the shifted model graphic form and the graphic form to be examined according to one embodiment of the present invention;

Fig. 12 is a diagram showing a state where the model graphic form subjected to estimated deformation and the graphic form to be examined are overlapped with each other according to one embodiment of the present invention;

Fig. 13 is a diagram showing one embodiment of a structure of a device having a recording medium in which a pattern collation program is stored according to the present invention.

## DESCRIPTION OF THE PREFERRED EMBODIMENT

The preferred embodiment of the present invention will be discussed hereinafter in detail with reference to the accompanying drawings. In the following description, numerous specific details are set forth in order to provide a thorough understanding of the present invention. It will be obvious, however, to those skilled in the art that the present invention may be practiced without these specific details. In other instance, well-known structures are not shown in detail in order to unnecessary obscure the present invention.

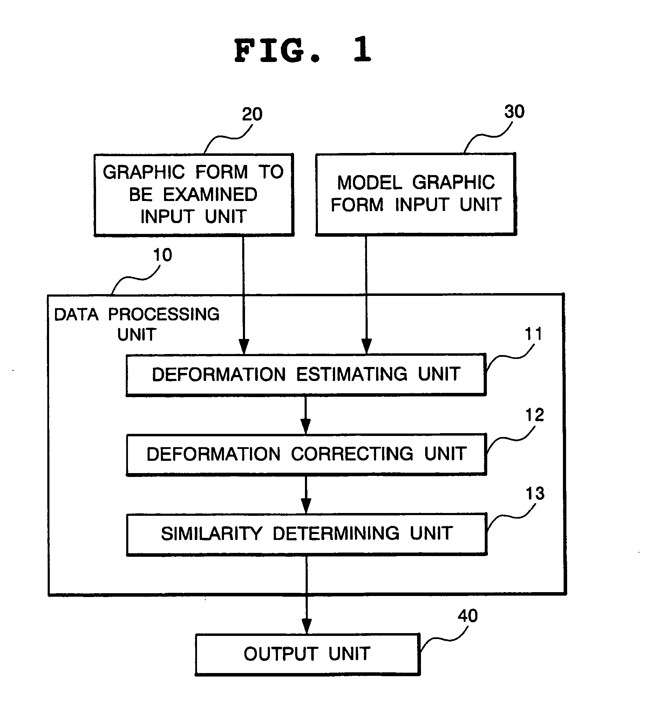

Fig. 1 is a block diagram showing a structure of a pattern collation device according to a first embodiment of the present invention.

With reference to Fig. 1, the pattern collation device according to the present embodiment includes a graphic form to be examined input unit 20 for receiving input of data of a graphic form to be examined which is a graphic form as an object of examination, a model graphic form input unit 30 for receiving input of data of a model graphic form as a graphic form based on which comparison is made, a data processing unit 10 for executing processing of pattern collation and an output unit 40 for outputting a processing result.

The data processing unit 10 includes a deformation estimating unit 11, a deformation correcting unit 12 and a similarity determining unit 13. These units operate in a manner as outlined in the following.

The deformation estimating unit 11 compares a feature point of a graphic form to be examined which is input through the graphic form to be examined input unit 20 and a feature point of a model graphic form input through the model graphic form input unit 30 to estimate the contents of deformation generated as a whole in the graphic form to be examined.

The deformation correcting unit 12, based on data of the contents of the deformation estimated by the deformation estimating unit 11, subjects the graphic form to be examined to correction which eliminates the deformation to generate a graphic form to be examined whose deformation has been corrected.

The similarity determining unit 13 compares the graphic form to be examined which is generated by the deformation correcting unit 12 with its deformation corrected and the model graphic form to calculate similarity between the two graphic forms and outputs the calculated similarity to the output unit 40.

Next, operation of the present embodiment will be described in detail with reference to the drawings.

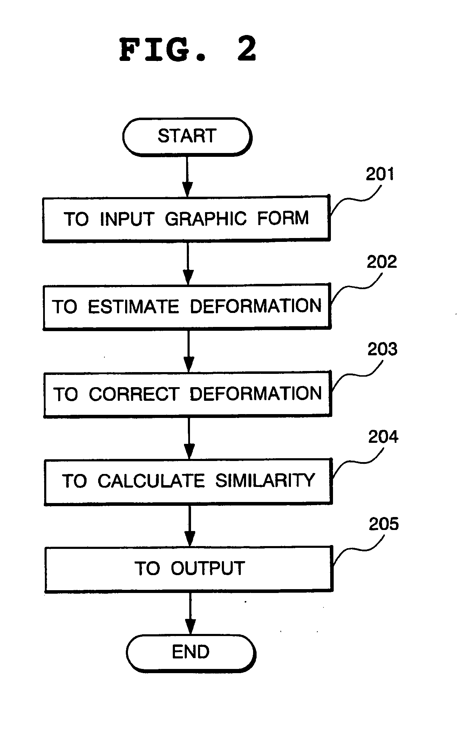

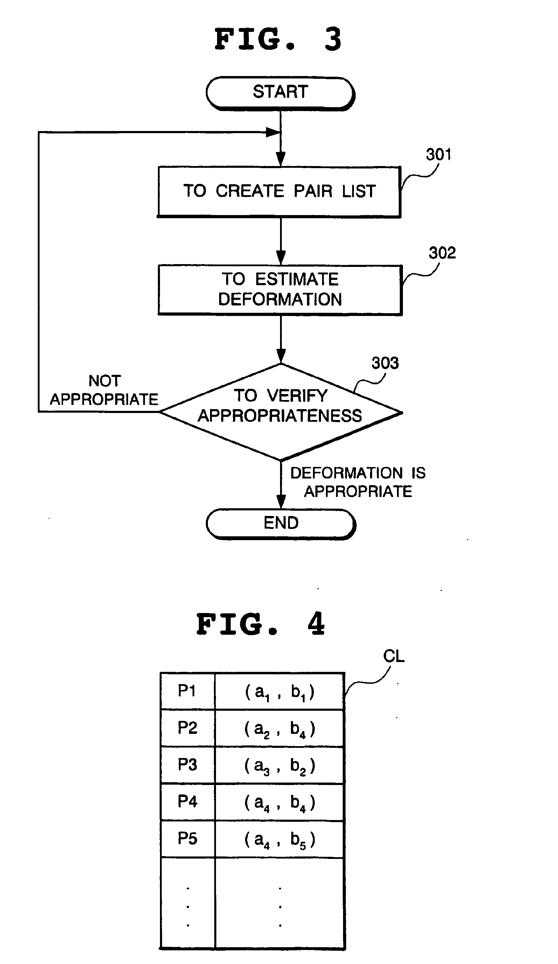

Fig. 2 is a flow chart for use in explaining processing of pattern collation according to the present embodiment. Fig. 3 is a flow chart for use in explaining processing conducted by the deformation estimating unit 11 of the present embodiment.

With reference to Fig. 2, in the processing of pattern collation according to the present embodiment, first, a graphic form to be examined which is a graphic form as an object of examination and a model graphic form as a graphic form based on which comparison is made are applied to the graphic form to be examined input unit 20 and the model graphic form input unit 30, respectively (Step 201).

Employed as the method of inputting the respective graphic forms are, for example, that of inputting information of a feature point indicative of features of each graphic form which is extracted in advance and that of inputting image data of each graphic form and extracting information of its feature point on the side of the graphic form to be examined input unit 20 and the model graphic form input unit 30 to output extracted information to the data processing unit 10.

When applied to character recognition, for example, a method can be adopted of inputting image data of a character to be identified to the graphic form to be examined input unit 20 and inputting character data registered in a dictionary to the model graphic form input unit 30.

When applied to fingerprint recognition, for example, image data of a fingerprint whose owner is to be found can be input to the graphic form to be examined input unit 20 and fingerprint data registered in a fingerprint data base can be input to the model graphic form input unit 30.

In a manner as described above, the graphic form to be examined input unit 20 may receive input of feature point information of a graphic form to be examined which is extracted in advance or may receive input of a graphic form to be examined itself and extract information of a feature point at the graphic form to be examined input unit 20. Similarly, the model graphic input unit 30 may receive input of feature point information of a model graphic form which is extracted in advance or may receive input of a model graphic form itself and extract information of a feature point at the model graphic form input unit 30.

Here, among possible feature points of a graphic form to be examined and a model graphic form are a point at which a line ceases (end point), a point at which a line branches (branch point) and a point at which lines intersect with each other (intersection point). As a feature quantity which is data indicative of a degree of features at each feature point, such data as a position of a feature point and a direction of a line which touches a feature point can be used. Also as a feature quantity, values of a curvature of a line which touches a point and a curvature of a line adjacent to the same or information such as location of surrounding feature points and the number of lines crossing between surrounding feature points may be added.

Next, the data of each graphic form applied to the graphic form to be examined input unit 20 and the model graphic form input unit 30 is transferred to the deformation estimating unit 11 of the data processing unit 10. The deformation estimating unit 11 compares feature point information of the graphic form to be examined which is input through the graphic form to be examined input unit 20 and feature point information of the model graphic form input through the model graphic form input unit 30 to estimate deformation generated in the graphic form to be examined (Step 202).

The deformation estimating unit 11 selects a pair of feature points which can be considered to be the same feature point in the two graphic forms and based on a difference in position between these feature points in the two graphic forms, estimates deformation generated in the graphic form to be examined.

As to deformation generated in a graphic form here, in a case of comparison for character recognition between a character registered in a dictionary and a character input by a camera or the like, for example, an image of a character shot by a camera or the like which is input to the graphic form to be examined input unit 20 will be optically distorted at the time of input. In fingerprint recognition, in a case where data of a fingerprint whose owner is to be found is input to the graphic form to be examined input unit 20 and fingerprint data registered at a fingerprint data base is input to the model graphic input unit 30, a graphic form to be examined and a model graphic form are both deformed at the time of fingerprinting

Here, while only with a graphic form to be examined and a model graphic form, deformation which the graphic form to be examined suffers and deformation which the model graphic suffers can not be obtained, detecting a difference in positional relationship of each individual feature point in both the graphic forms results in detecting deformation combining deformation inverse to the deformation which the model graphic form suffers and the deformation which the graphic form to be examined suffers, so that as deformation applying the detected deformation in a reverse direction, deformation for matching the graphic form to be examined with the model graphic form can be estimated.

Next, the deformation correcting unit 12 corrects the deformation of the graphic form to be examined by subjecting the graphic form to be examined to deformation having a reverse relationship with the deformation estimated by the deformation estimating unit 11 (Step 203).

Next, the similarity determining unit 13 compares the graphic form to be examined which is obtained with its deformation corrected by the deformation correcting unit 12 and the model graphic form to calculate similarity between the two graphic forms (Step 204).

Then, the output unit 40 outputs the similarity calculated at the similarity determining unit 13 (Step 205).

At Step 203, other than a method of subjecting the graphic form to be examined to deformation in reverse relationship with the deformation estimated at the deformation estimating unit 11, thereby correcting the deformation of the graphic form to be examined, a method can be adopted of subjecting the model graphic form to the deformation estimated at the deformation estimating unit 11, thereby matching deformation of the model graphic form and that of the graphic form to be examined with each other. This method enables comparison of the two graphic forms to calculate similarity between the two graphic forms at Step 204 in the same manner as described above.

Next, with reference to Fig. 3, detailed description will be made of deformation estimating processing at Step 202 of Fig. 2.

With reference to Fig. 3, first, compare feature point information of the graphic form to be examined which is applied through the graphic form to be examined input unit 20 and feature point information of the model graphic form which is applied through the model graphic form input unit 30 and sequentially register a pair of feature points determined to be corresponding feature points as a feature point pair for deformation estimation to create a list of feature point pairs for deformation estimation (Step 301).

At Step 301, for example, select one arbitrary feature point "a" from among feature points of the graphic form to be examined and one arbitrary feature point "b" from among feature points of the model graphic form to obtain a difference between a feature quantity of the feature point "a" and that of the feature point "b" and when the difference between these feature quantities is not greater than a predetermined threshold value, determine that they are corresponding feature points to register the pair of the feature points, the feature point "a" of the graphic form to be examined and the feature point "b" of the model graphic form which are determined to be corresponding feature points, at the list of feature point pairs for deformation estimation.

In the list of feature point pairs for deformation estimation, a pair of corresponding feature points composed of the feature point "a" of the graphic form to be examined and the feature point "b" of the model graphic is registered as illustrated in the example of Fig. 4.

Next, estimate deformation which best matches feature points as a pair registered in the list of feature point pairs for deformation estimation (Step 302).

Among methods which can be employed here are a method of selecting, from among deformation models indicative of the contents of deformation prepared in advance according to nature of a graphic form to be applied, a model which makes feature points of a pair be best matched from a plurality of deformation models and a method of obtaining, from among deformation models prepared in advance corresponding to values of various kinds of parameters, a value of a parameter which best matches feature points of each pair.

When applied to fingerprint recognition, for example, assuming that a finger is an elastic body, express its elastic deformation as a parameter (parallel displacement, shrinkage/expansion, rotation, shearing) and register, at the list of feature point pairs for deformation estimation, a position of each feature point obtained when a fingerprint input through the graphic form to be examined input unit 20 is subjected to elastic deformation indicated by each parameter to determine a parameter of elastic deformation such that the elastic deformation makes the positions of the feature points best match with each other.

Next, verify the estimated deformation and when the deformation is appropriate, output the deformation (Step 303).

At the verification of the appropriateness at Step 303, in a case, for example, where an elastic energy of the estimate deformation is larger than a predetermined value, considering that the estimated deformation is too large, the deformation model for use can be changed to try again to create a list of feature point pairs for deformation estimation.

Next, deformation estimating processing by the deformation estimating unit 11 according to the present embodiment will be described with respect to a more specific embodiment.

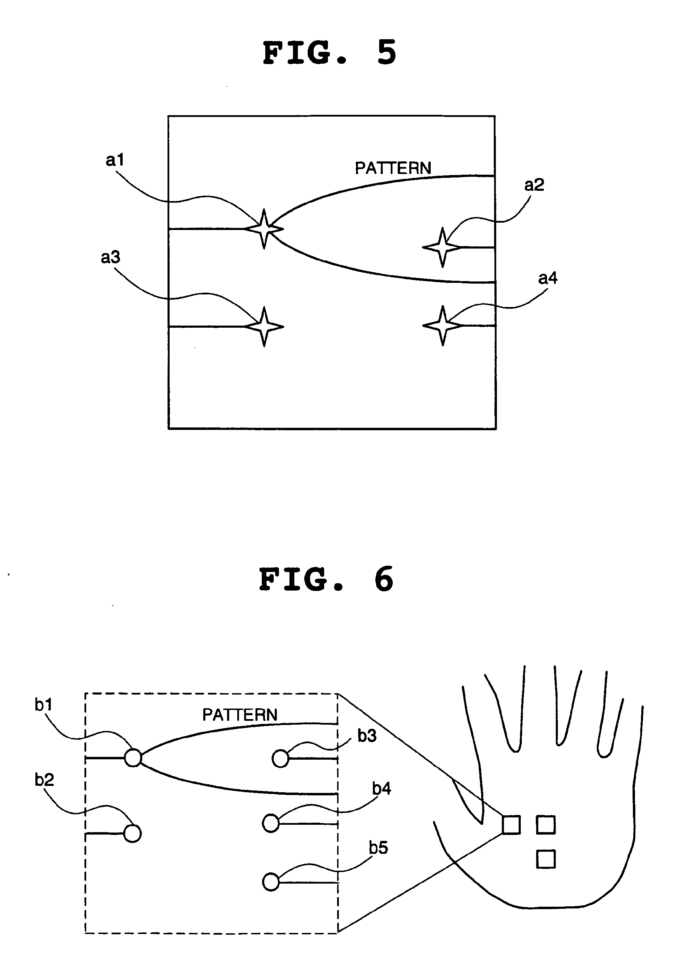

Here, using one example of a model graphic form illustrated in Fig. 5 and one example of a graphic form to be examined shown in Fig. 6, description will be made of processing of estimating deformation of the graphic form to be examined to check whether the graphic form to be examined is the same as the model graphic form. Assume that in the model graphic form shown in Fig. 5, a1 to a4 are feature points of the model graphic form and that b1 to b4 in the graphic form to be examined shown in Fig. 6 are feature points of the graphic form to be examined.

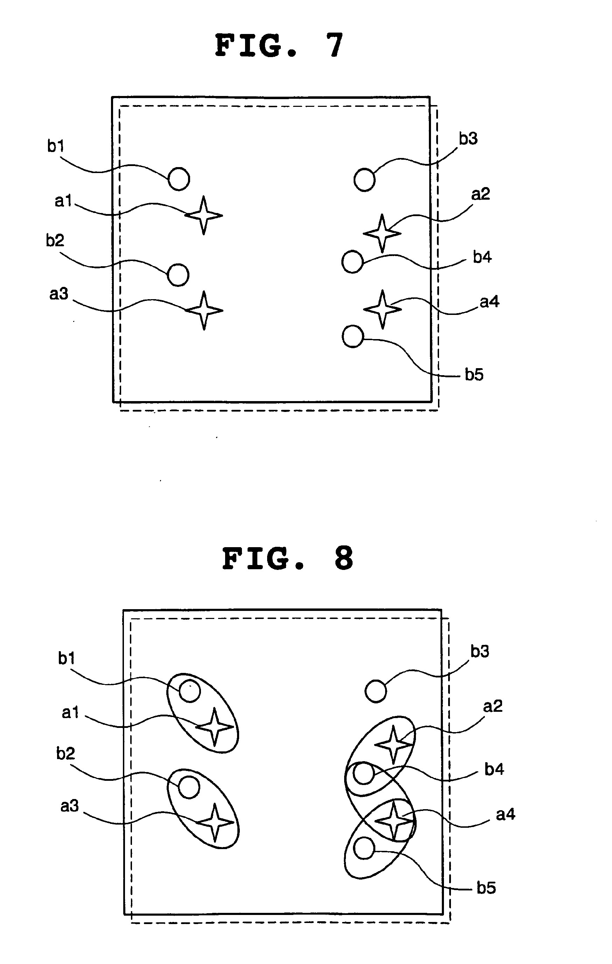

First, overlap the graphic form to be examined and the model graphic form in a manner as illustrated in Fig. 7 to compare the feature points a1 to a4 of the model graphic form and the feature points b1 to b4 of the graphic form to be examined and pair those which can be considered to be the same feature points such as (a1, b1), (a2, b4), (a3, b2), (a4, b4) and (a4, b5). These pairs are illustrated in Fig. 8.

Although taking the fact that the graphic form to be examined is deformed into consideration here, an error to some degree should be expected and there might be a case where a corresponding relationship between feature points can not be completely found, correlate those which seem to be corresponding to each other irrespective of overlap such as (a2, b4), (a4, b4) and (a4, b5). Then, as illustrated in Fig. 4, record a list, a list CL of point pairs for deformation estimation, where these pairs p1:(a1, b1), p2:(a2, b4), p3:(a3, b2), p4:(a4, b4) and p5:(a4, b5) are registered (Step 301).

Here, with coordinates at a feature point of the model graphic form represented as $(x, y)$ and coordinates at a feature point of the graphic form to be examined as $(X, Y)$, assume that the model graphic form as a whole is subjected to uniform elastic deformation as represented by the Mathematical Expression 1 using a 2x2 matrix $\alpha$ and a two-dimensional vector $\beta$.

$$\begin{pmatrix} X \\ Y \end{pmatrix} = \alpha \begin{pmatrix} x \\ y \end{pmatrix} + \beta \qquad \text{[expression 1]}$$

Assume that among the pairs p1 to p5 registered at the list of feature point pairs for deformation estimation, a position of a feature point in the model graphic form and a position of a feature point in the graphic form to be examined in an i-th pair pi are $(x_i, y_i)$ and $(X_i, Y_i)$, respectively. When subjected to elastic deformation as shown in the Mathematical Expression 1, the feature point at $(x_i, y_i)$ on the model graphic form will shift to the position shown by the expression in Fig. 6.

$$\alpha \begin{pmatrix} x_i \\ y_i \end{pmatrix} + \beta \qquad \text{[expression 2]}$$

Difference between the present position and $(X_i, Y_i)$, that is, a difference in position from the pair pi when the model graphic form is subjected to the deformation shown by the Mathematical Expression 1 will be ei in the Mathematical Expression 3.

$$\begin{pmatrix} X_i \\ Y_i \end{pmatrix} = \alpha \begin{pmatrix} x_i \\ y_i \end{pmatrix} + \beta + e_i \qquad \text{[expression 3]}$$

A total E of positional differences (square thereof) of the pairs p1 to p5 registered at the list of feature point pairs for deformation estimation is expressed by the following Mathematical Expression 4.

$$E = \sum_i e_i^{\mathsf{T}} e_i \qquad \text{[expression 4]}$$

Assume that seeking $\alpha$ and $\beta$ which minimize the total E of the positional differences results in obtaining A and b, respectively. Since a total of

differences of the corresponding feature points at this time is the minimum, deformation expressed by the Mathematical Expression 5 which is a formula using A and b will be deformation making points of pairs registered at the list of feature point pairs for deformation estimation be best matched.

$$\begin{pmatrix} X \\ Y \end{pmatrix} = A \begin{pmatrix} x \\ y \end{pmatrix} + b \qquad \text{[expression 5]}$$

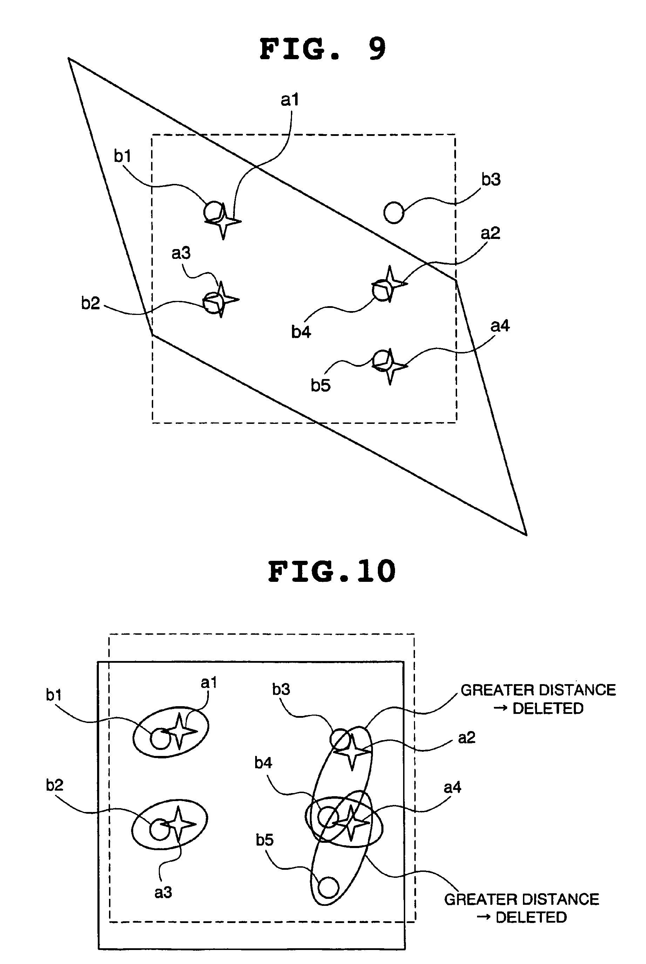

Therefore, the deformation generated in the graphic form to be examined can be estimated as that expressed by the Mathematical Expression 5 (Step 302). Result of overlap between the model graphic form subjected to the estimated deformation and the graphic form to be examined is as shown in Fig. 9.

Parameters and energy of the deformation are obtained in a manner as described in the following. The vector b in the Mathematical Expression 5 represents parallel displacement and the matrix A represents contraction/expansion, rotation and shearing. Expressing $\lambda 0$, $\lambda 1$ and $\lambda 2$ as indicated in the Mathematical Expressions 6, 7 and 8, the elastic energy F will be expressed as shown in the Mathematical Expression 9 (in the Mathematical Expression 9, K represents a surrounding compression rate and $\mu$ represents a shearing rate, both of which are constants determined by their materials).

$$\lambda_0 = \frac{1}{4}\left\{ \mathrm{tr}A^\top A \begin{pmatrix} 1 & 0 \\ 0 & 1 \end{pmatrix} - 2 \right\} \qquad \text{[expression 6]}$$

$$\lambda_1 = \frac{1}{4}\mathrm{tr}A^\top A \begin{pmatrix} 1 & 0 \\ 0 & -1 \end{pmatrix} \qquad \text{[expression 7]}$$

$$\lambda_2 = \frac{1}{4}\mathrm{tr}A^\top A \begin{pmatrix} 0 & 1 \\ 1 & 0 \end{pmatrix} \qquad \text{[expression 8]}$$

$$F = 2K\lambda_0^2 + 2\mu\left(\lambda_1^2 + \lambda_2^2\right) \qquad \text{[expression 9]}$$

Rotation and parallel displacement are simple shift of a position and neither of them contributes elastic energy. $\lambda 0$ is a parameter corresponding to contraction/expansion (which takes "0" when neither contraction nor expansion is generated, takes a negative value when contraction is generated and takes a positive value when expansion is generated), while $\lambda 1$ and $\lambda 2$ are parameters corresponding to shearing distortion (which takes "0" when no distortion is generated and takes a larger absolute value as distortion is enhanced).

When the here obtained parameters such as elastic energy and elastic deformation are too large for the deformation estimated for the graphic form to be examined, the deformation is inappropriate as deformation to be generated in the graphic form to be examined, whereby deformation will be again estimated (Step 303).

In a case, for example, where a graphic form as an object of examination is a fingerprint, a palmprint or the like, because the examination target is not such a highly extensible substance as rubber, contraction/expansion is limited. Therefore, when $\lambda 0$ exceeds a range of possible contraction/expansion which is predetermined for a finger, abandon the estimation. In addition, since distortion of a fingerprint, a palmprint and the like is also limited, when $\lambda 1$ or $\lambda 2$ exceeds a possible range of distortion for a fingerprint or a palmprint, abandon the estimation as well. Also as to elastic energy itself, when it fails to fall within an assumed range for a fingerprint or a palmprint, abandon the estimation.

Possible processing to be conducted subsequently when estimation is abandoned are processing of changing a deformation model, processing of executing estimation of deformation again after changing a method of creating a list of feature point pairs for deformation estimation and other processing.

Here, description will be made of an example of changing a deformation model.

Assume, for example, that a finger is a rigid body on which severer constrain is placed than that on an elastic body, consideration will be given to a deformation model of the rigid body (because a rigid body will not be deformed, the model includes only the parameters of parallel displacement and rotation). First, assuming that the model is a rigid body, convert a model graphic form and a graphic form to be examined such that a difference in position between paired feature points of each of the graphic forms becomes smaller. Overlap of the model graphic form and the graphic form to be examined based on the conversion result is as illustrated in Fig. 10.

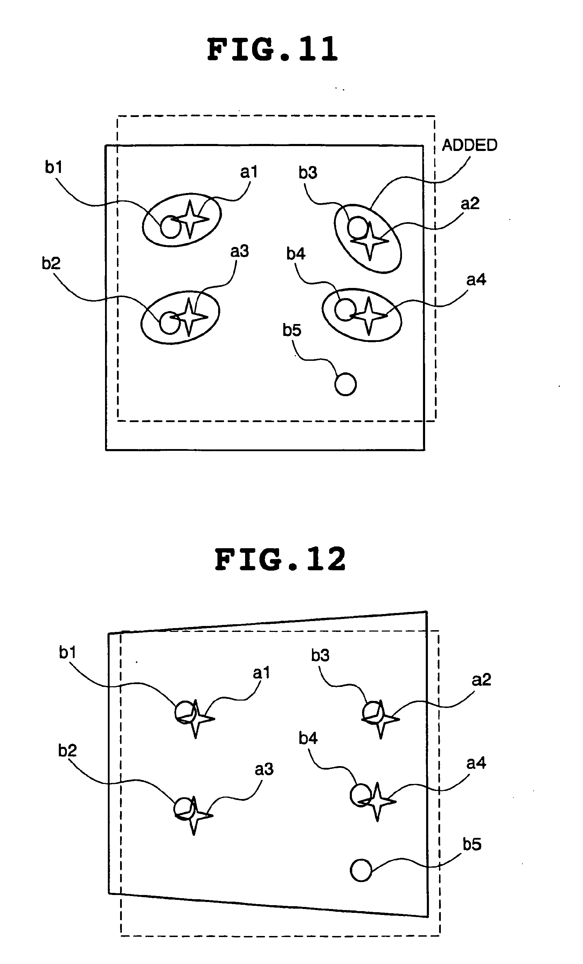

Next, since in Fig. 10, a distance between paired feature points p2:(a2, b4) and p5:(a4, b5) registered in the list of feature point pairs for deformation estimation will be increased after deformation, delete the pairs from the list of feature point pairs for deformation estimation. In addition, as illustrated in Fig. 11, since (a2, b3) come closer to each other after deformation, additionally register the pair at the list of feature point pairs for deformation estimation to make the list of feature point pairs for deformation estimation include p1:(a1, b1), p3:(a3, b2), p4:(a4, b4) and p6:(a2, b3).

While it is possible to end estimation processing here, it is also possible to conduct estimation again with respect to an elastic deformation model more similar to an actual finger which is used at first as a deformation model of a finger. Fig. 12 is a diagram showing the graphic forms subjected to elastic deformation estimated using the modified list of feature point pairs for deformation estimation including p1:(a1, b1), p3:(a3, b2), p4: (a4, b4) and p6:(a2, b3).

By thus repeating each processing of pair selection, deformation estimation and deformation verification, appropriateness of selection of a feature point pair is gradually increased to estimate a pair of properly corresponding feature points and deformation generated in the graphic form to be examined.

Upon estimation of deformation, by subjecting the feature point (X, Y) of the graphic form to be examined to inversion of the formula of the Mathematical Expression 5 which inversion is represented by the formula of the Mathematical Expression 10, the deformation will be corrected to convert the feature point to coordinates (x, y) of a feature point which can be directly compared with the model graphic form, so that by the comparison between the graphic form to be examined whose deformation has been corrected and the model graphic form, similarity between the graphic form to be examined and the model graphic form is calculated to determine whether the graphic form to be examined and the model graphic form are the same graphic form or not.

$$\begin{pmatrix} x \\ y \end{pmatrix} \doteq A^{-1} \left\{ \begin{pmatrix} X \\ Y \end{pmatrix} - b \right\} \qquad \text{[expression 10]}$$

It is also possible to narrow down feature point pairs registered at the above-described list of feature point pairs for deformation estimation to those more reliable by deleting a pair of feature points which will go apart from each other by a distance greater than a predetermined threshold value when subjected to estimated deformation from the list of feature point pairs for deformation estimation and repeating estimation a predetermined number of times or until no further feature point pair to be deleted exists.

As described in the foregoing, since according to the present embodiment, deformation generated in a graphic form to be examined is estimated to correct the deformation and the graphic form to be examined whose deformation has been corrected and the model graphic form are compared to collate the two graphic forms, even when the graphic form to be examined has deformation (or when deformation of the graphic form to be examined is different from that of the model graphic form), the graphic form to be examined and the model graphic form can be strictly discriminated and collated with each other.

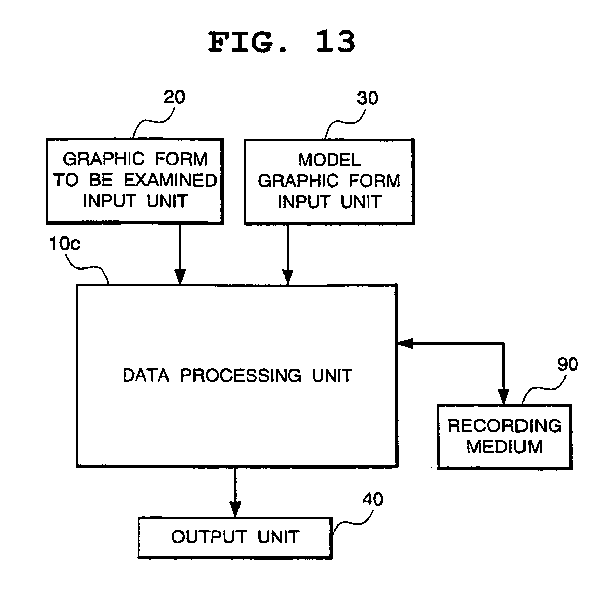

Fig. 13 is a diagram showing one embodiment of a structure having a recording medium in which a pattern collation program is recorded according to the present invention.

The pattern collation program is stored in a recording medium 90 such as a magnetic disc or a semiconductor memory. Then, loading the program into a data processing unit 10c which is a computer processing device from the recording medium to control operation of the data processing unit 10c realizes the above-described functions. As a result, the data processing unit 10c executes the processing conducted by the data processing units 10, 10a and 10b in the first, second and third embodiments under the control of the pattern collation program.

Although the present invention has been described with respect to the preferred modes of implementation and embodiments, the present invention is not necessarily limited to the above-described modes and embodiments but realized in various forms within a scope of its technical ideas.

As described in the foregoing, the pattern collation device of the present invention attains the following effects.

First, according to the present invention, since deformation generated in a graphic form to be examined is estimated and corrected, the graphic form to the examined can be correctly identified even when the form is deformed. Moreover, the present invention enables a change of a feature quantity caused by deformation and an error of extraction of a feature quantity to be separated to realize accurate comparison of feature quantities.

Secondly, according to the second embodiment of the present invention, by dividing a graphic form to be examined into small regions and estimating deformation at each small region, the graphic form to be examined can be correctly discriminated even when the form partly has different deformation.

Thirdly, according to the third embodiment of the present invention, when the number of nearby feature point pairs existing in a graphic form to be examined is more than a predetermined number, deformation around the feature points is estimated to reduce deformation estimation errors, so that even when the graphic form to be examined partly has different deformation, it can be discriminated correctly.

**Claims**

1.  A pattern collation device for comparing and collating a graphic form to be examined and a model graphic form as a graphic form based on which comparison is made, comprising:

    deformation estimating means (11) for pairing feature points in each of said graphic form to be examined which is a graphic form as an object of examination and said model graphic form as a graphic form based on which comparison between which a difference in feature quantity indicative of a degree of features at said feature point is small, and estimating the deformation which makes the paired feature points be best matched as deformation generated in said graphic form to be examined which best match correspondences between said respective feature points,
    deformation correcting means (12) for correcting the deformation generated in the graphic form to be examined based on information about the deformation estimated by said deformation estimating means (11),
    similarity determining means (13) for comparing said graphic form to be examined whose deformation is corrected and said model graphic form to calculate similarity,
    ***characterized in that*** said deformation estimating means (11)
    calculates the elastic energy necessary for the deformation generated in said graphic form to be examined which makes the difference of the corresponding feature points the minimum, and
    estimates the deformation by using said elastic energy,
    wherein the conversion expression which matches a position of a feature point of the graphic form to be examined with a position of a feature point of the model graphic form is obtained, parameters for expressing contraction/expansion and shearing distortion are obtained based on the coefficient of the conversion expression, said elastic energy is expressed as the sum of the energy of contraction/expansion, and the energy of shearing distortion by using parameters for expressing contraction/expansion and shearing distortion,
    wherein when the deformation generated in the graphic form to be examined is expressed by the following expression (here, coordinates at a feature point of the model graphic form are represented as (x, y) and coordinates at a feature point of the graphic form to be examined as (X, Y)),

$$\begin{pmatrix} X \\ Y \end{pmatrix} = A \begin{pmatrix} x \\ y \end{pmatrix} + b$$

a parameter $\lambda 0$ corresponding to contraction/expansion is expressed by the following expression, and

$$\lambda_0 = \frac{1}{4}\left\{ \mathrm{tr} A^\top A \begin{pmatrix} 1 & 0 \\ 0 & 1 \end{pmatrix} - 2 \right\}$$

parameters $\lambda 1$ and $\lambda 2$ corresponding to shearing distortion are expressed by the following expressions,

$$\lambda_1 = \frac{1}{4} \mathrm{tr} A^\top A \begin{pmatrix} 1 & 0 \\ 0 & -1 \end{pmatrix}$$

$$\lambda_2 = \frac{1}{4} \mathrm{tr} A^\top A \begin{pmatrix} 0 & 1 \\ 1 & 0 \end{pmatrix}$$

said elastic energy is expressed by the following expression using a surrounding compression rate K and a shearing rate $\mu$,

$$F = 2K\lambda_0^2 + 2\mu\left(\lambda_1^2 + \lambda_2^2\right)$$

, and
wherein said deformation estimating means (11) verifies the appropriateness of the estimated deformation by whether the scale of the deformation is larger than a predetermined value,
if the scale of the deformation is larger than the predetermined value, the current deformation is rejected and the deformation means (11) estimates anew the scale of the deformation after having paired in a different manner the feature points of the graphic form with the feature points of the model graphic form.

2. A pattern collating method of comparing and collating a graphic form to be examined and a model graphic form as a graphic form based on which comparison is made, comprising the steps of:

a deformation estimating step of pairing feature points in each of said graphic form to be examined which is a graphic form as an object of examination and said model graphic form as a graphic form based on which comparison between which a difference in feature quantity indicative of a degree of features at said feature point is small, and estimating the deformation which makes the paired feature points be best matched as deformation generated in said graphic form to be examined which best match correspondences between said respective feature points,
a deformation correcting step of correcting the deformation generated in the graphic form to be examined based on information about the deformation estimated by said deformation estimating step,
similarity determining step of comparing said graphic form to be examined whose deformation is corrected and said model graphic form to calculate similarity,
***characterized in that***
in said deformation estimating step,
calculates the elastic energy necessary for the deformation generated in said graphic form to be examined which makes the difference of the corresponding feature points the minimum, and
estimates the deformation by using said elastic energy,
wherein the conversion expression which matches a position of a feature point of the graphic form to be examined with a position of a feature point of the model graphic form is obtained, parameters for expressing contraction/expansion and shearing distortion are obtained based on the coefficient of the conversion expression, said elastic energy is expressed as the sum of the energy of contraction/expansion, and the energy of shearing distortion by using parameters for expressing contraction/expansion and shearing distortion,
wherein when the deformation generated in the graphic form to be examined is expressed by the following expression (here, coordinates at a feature point of the model graphic form are represented as (x, y) and coordinates at a feature point of the graphic form to be examined as (X, Y)),

$$\begin{pmatrix} X \\ Y \end{pmatrix} = A \begin{pmatrix} x \\ y \end{pmatrix} + b$$

a parameter $\lambda 0$ corresponding to contraction/expansion is expressed by the following expression, and

$$\lambda_0 = \frac{1}{4} \left\{ \text{tr} A^\top A \begin{pmatrix} 1 & 0 \\ 0 & 1 \end{pmatrix} - 2 \right\}$$

parameters $\lambda 1$ and $\lambda 2$ corresponding to shearing distortion are expressed by the following expressions,

$$\lambda_1 = \frac{1}{4} \text{tr} A^\top A \begin{pmatrix} 1 & 0 \\ 0 & -1 \end{pmatrix}$$

$$\lambda_2 = \frac{1}{4} \text{tr} A^\top A \begin{pmatrix} 0 & 1 \\ 1 & 0 \end{pmatrix}$$

said elastic energy is expressed by the following expression using a surrounding compression rate K and a shearing rate $\mu$

$$F = 2K\lambda_0^2 + 2\mu \left( \lambda_1^2 + \lambda_2^2 \right)$$

, and wherein said deformation estimating step
verifies the appropriateness of the estimated deformation by whether the scale of the deformation is larger than a predetermined value,
if if the scale of the deformation is larger than the predetermined value, the current deformation is rejected and the deformation means (11) estimates anew the scale of the deformation after having paired in a different manner the feature points of the graphic form with the feature points of the model graphic form.

3. A pattern collation program for comparing and collating a graphic form to be examined and a model graphic form as a graphic form based on which comparison is made by controlling a computer, comprising the functions of:

a deformation estimating function of pairing feature points in each of said graphic form to be examined which is a graphic form as an object of examination and said model graphic form as a graphic form based on which comparison between which a difference in feature quantity indicative of a degree of features at said feature point is small, and estimating the deformation which makes the paired feature points be best matched as deformation generated in said graphic form to be examined which best match correspondences between said respective feature points,

a deformation correcting function of correcting the deformation generated in the graphic form to be examined based on information about the deformation estimated by said deformation estimating function,

similarity determining function of comparing said graphic form to be examined whose deformation is corrected and said model graphic form to calculate similarity,

***characterized in that***

said deformation estimating function

calculates the elastic energy necessary for the deformation generated in said graphic form to be examined which makes the difference of the corresponding feature points the minimum, and

estimates the deformation by using said elastic energy, wherein the conversion expression which matches a position of a feature point of the graphic form to be examined with a position of a feature point of the model graphic form is obtained, parameters for expressing contraction/expansion and shearing distortion are obtained based on the coefficient of the conversion expression, said elastic energy is expressed as the sum of the energy of contraction/expansion, and the energy of shearing distortion by using parameters for expressing contraction/expansion and shearing distortion,

wherein when the deformation generated in the graphic form to be examined is expressed by the following expression (here, coordinates at a feature point of the model graphic form are represented as (x, y) and coordinates at a feature point of the graphic form to be examined as (X, Y)),

$$\begin{pmatrix} X \\ Y \end{pmatrix} = A \begin{pmatrix} x \\ y \end{pmatrix} + b$$

a parameter $\lambda 0$ corresponding to contraction/expansion is expressed by the following expression, and

$$\lambda_0 = \frac{1}{4}\left\{ \mathrm{tr}A^{\top}A \begin{pmatrix} 1 & 0 \\ 0 & 1 \end{pmatrix} - 2 \right\}$$

parameters $\lambda 1$ and $\lambda 2$ corresponding to shearing distortion are expressed by the following expressions,

$$\lambda_1 = \frac{1}{4}\mathrm{tr}A^{\top}A \begin{pmatrix} 1 & 0 \\ 0 & -1 \end{pmatrix}$$

$$\lambda_2 = \frac{1}{4} \mathrm{tr} A^\top A \begin{pmatrix} 0 & 1 \\ 1 & 0 \end{pmatrix}$$

said elastic energy is expressed by the following expression using a surrounding compression rate K and a shearing rate $\mu$

$$F = 2K\lambda_0^2 + 2\mu\left(\lambda_1^2 + \lambda_2^2\right)$$

, and

wherein said deformation estimating function

verifies the appropriateness of the estimated deformation by whether the scale of the deformation is larger than a predetermined value,

if the scale of the deformation is larger than the predetermined value, the current deformation is rejected and the deformation means (11) estimates anew the scale of the deformation after having paired in a different manner the feature points of the graphic form with the feature points of the model graphic form.

**Patentansprüche**

1. Mustervergleichsvorrichtung zum Vergleichen und Kollationieren einer zu prüfenden Grafikform und einer Modellgrafikform als einer Grafikform, auf der basierend ein Vergleich durchgeführt wird, mit:

    einer Deformationsabschätzeinrichtung (11) zum Paaren von Merkmalspunkten in jeder der zu prüfenden Grafikform, die eine Grafikform als ein Prüfobjekt ist, und der Modellgrafikform als einer Grafikform, auf der basierend ein Vergleich zwischen deren Differenz in der Merkmalsquantität, die einen Grad von Merkmalen an dem Merkmalspunkt angibt, klein ist, und Abschätzen der Deformation, die die gepaarten Merkmalspunkte in beste Übereinstimmung bringt, als Deformation, die in der zu prüfenden Grafikform erzeugt wird, die am besten Übereinstimmungen zwischen den jeweiligen Merkmalspunkten erzielt,
    einer Deformationskorrektureinrichtung (12) zum Korrigieren der Deformation, die in der zu prüfenden Grafikform generiert wird, basierend auf Informationen über die Deformation, die durch die Deformationsabschätzeinrichtung (11) abgeschätzt wurde,
    einer Ähnlichkeitsbestimmungseinrichtung (13) zum Vergleichen der zu prüfenden Grafikform, deren Deformation korrigiert wurde, und der Modellgrafikform, um Ähnlichkeit zu berechnen,
    **dadurch gekennzeichnet , dass** die Deformationsabschätzeinrichtung (11)
    die elastische Energie berechnet, die für die in der zu prüfenden Grafikform erzeugte Deformation erforderlich ist, die die Differenz in dem korrespondierenden Merkmalpunkten minimal macht, und
    die Deformation unter Verwendung der elastischen Energie abschätzt,
    wobei der Umwandlungsausdruck, der eine Position eines Merkmalspunkts der zu prüfenden Grafikform mit einer Position eines Merkmalspunkts der Modellgrafikform anpasst, erhalten wird, wobei Parameter zum Ausdrücken von Kontraktion/Expansion und Scherverzerrung basierend auf dem Koeffizienten des Umwandlungsausdruckes erhalten werden, die elastische Energie als Summe der Energie von Kontraktion/Expansion und der Energie der Scherverzerrung durch Verwendung von Parametern zum Ausdrücken von Kontraktion/Expansion und Scherverzerrung ausgedrückt wird,
    wobei, wenn die Deformation, die in der zu prüfenden Grafikform erzeugt wird, durch die im folgenden Ausdruck ausgedrückt wird (hier sind Koordinaten an einem Merkmalspunkt der Modellkraftform als (x, y) bezeichnet und Koordinaten an einem Merkmalspunkt der zu prüfenden Grafikform als (X, Y)),

$$\begin{pmatrix} X \\ Y \end{pmatrix} = A \begin{pmatrix} x \\ y \end{pmatrix} + b$$

ein Parameter $\lambda 0$ entsprechend zu Kontraktion/Expansion durch den folgenden Ausdruck ausgedrückt wird, und

$$\lambda_0 = \frac{1}{4}\left\{ \mathrm{tr}A^{\top}A \begin{pmatrix} 1 & 0 \\ 0 & 1 \end{pmatrix} - 2 \right\}$$

Parameter $\lambda 1$ und $\lambda 2$ entsprechend einer Scherverzerrung durch die folgenden Ausdrücke ausgedrückt werden,

$$\lambda_1 = \frac{1}{4}\mathrm{tr}A^{\top}A \begin{pmatrix} 1 & 0 \\ 0 & -1 \end{pmatrix}$$

$$\lambda_2 = \frac{1}{4}\mathrm{tr}A^{\top}A \begin{pmatrix} 0 & 1 \\ 1 & 0 \end{pmatrix}$$

die elastische Energie durch den folgenden Ausdruck ausgedrückt wird unter Verwendung einer Umgebungskompressionsrate (K) und einer Scherrate $\mu$

$$F = 2K\lambda_0^2 + 2\mu\left( \lambda_1^2 + \lambda_2^2 \right)$$

und
wobei die Deformationsabschätzeinrichtung (11)
die Angemessenheit der abgeschätzten Deformation dadurch verifiziert, ob der Maßstab der Deformation größer als ein vorgegebener Wert ist,
falls der Maßstab der Deformation größer als der vorgegebene Wert ist, wird die momentane Deformation zurückgewiesen, und die Deformationseinrichtung (11) bestimmt erneut den Maßstab der Deformation, nachdem sie die Merkmalspunkte der Grafikform mit den Merkmalspunkten der Modellgrafikform erneut gepaart hat.

2. Mustervergleichsverfahren zum Vergleichen und Kollatieren einer Grafikform, die zu überprüfen ist, und einer Modellgrafikform als einer Grafikform, aufgrund derer ein Vergleich durchgeführt wird, mit den Schritten:

einem Deformationsabschätzschritt des Paarens von Merkmalspunkten in jeder der zu prüfenden Grafikform, die eine Grafikform als ein Objekt der Überprüfung ist, und der Modellgrafikform als einer Grafikform, worauf basierend ein Vergleich zwischen denen eine Differenz in der Merkmalsquantität klein ist, die einen Grad von Merkmalen an den Merkmalspunkten angibt, und Abschätzen der Deformation, die die gepaarten Merkmalspunkte am besten anpasst, als Deformation, die in der zu prüfenden Grafikform erzeugt wird, die am besten Korrespondenzen zwischen den jeweiligen Merkmalspunkten anpasst,

einem Deformationskorrekturschritt der Korrektur der Deformation, die in der zu prüfenden Grafikform erzeugt wird, basierend auf Informationen über die Deformation, die durch den Deformationsabschätzschritt abgeschätzt wurde, einem Ähnlichkeitsbestimmungsschritt des Vergleichs der zu prüfenden Grafikform, deren Grafikform korrigiert wurde, und der Modellgrafikform, um Ähnlichkeit zu berechnen,

**dadurch gekennzeichnet, dass**

in dem Deformationsabschätzschritt

Berechnen der erforderlichen elastischen Energie für die Deformation, die in der zu prüfenden Grafikform erzeugt wird, die die Differenz der entsprechenden Merkmalspunkte minimal macht, und

Berechnen der Deformation durch Verwendung der elastischen Energie,

wobei der Umwandlungsausdruck, der eine Position eines Merkmalspunktes der zu prüfenden Grafikform mit einer Position eines Merkmalspunkts der Modellgrafikform anpasst, erhalten wird, Parameter zum Ausdrücken von Kontraktion/Expansion und Scherverzerrung basierend auf dem Koeffizienten des Umwandlungsausdruckes erhalten werden, die elastische Energie als die Summe der Energie von Kontraktion/Expansion und der Energie der Scherverzerrung durch Verwendung von Parametern für den Ausdruck von Kontraktion/Expansion und Scherverzerrung ausgedrückt wird,

wobei, wenn die Deformation, die in der zu prüfenden Grafikform erzeugt wird, durch die im folgenden Ausdruck ausgedrückt wird (hier sind Koordinaten an einem Merkmalspunkt der Modellkraftform als (x, y) bezeichnet und Koordinaten an einem Merkmalspunkt der zu prüfenden Grafikform als (X, Y)),

$$\begin{pmatrix} X \\ Y \end{pmatrix} = A \begin{pmatrix} x \\ y \end{pmatrix} + b$$

ein Parameter $\lambda_0$ entsprechend der Kontraktion/Expansion durch den folgenden Ausdruck ausgedrückt wird, und

$$\lambda_0 = \frac{1}{4} \left\{ \mathrm{tr} A^\top A \begin{pmatrix} 1 & 0 \\ 0 & 1 \end{pmatrix} - 2 \right\}$$

Parameter $\lambda_1$ und $\lambda_2$ entsprechend der Scherverzerrung durch die folgenden Ausdrücke ausgedruckt werden,

$$\lambda_1 = \frac{1}{4} \mathrm{tr} A^\top A \begin{pmatrix} 1 & 0 \\ 0 & -1 \end{pmatrix}$$

$$\lambda_2 = \frac{1}{4} \mathrm{tr} A^\top A \begin{pmatrix} 0 & 1 \\ 1 & 0 \end{pmatrix}$$

die elastische Energie durch den folgenden Ausdruck unter Verwendung einer Umgebungskompressionsrate und einer Scherrate $\mu$ ausgedrückt werden

$$F = 2K\lambda_0^2 + 2\mu\left(\lambda_1^2 + \lambda_2^2\right)$$

wobei der Deformationsabschätzschritt
die Angemessenheit der abgeschätzten Deformation dadurch verifiziert, ob der Maßstab der Deformation größer ist als ein vorgegebener Wert,
falls der Maßstab der Deformation größer ist als der vorgegebene Wert, die momentane Deformation zurückgewiesen wird und die Informationseinrichtung (11) erneut den Maßstab der Deformation berechnet, nachdem die Merkmalspunkte der Grafikform mit den Merkmalspunkten der Modellgrafikform erneut gepaart wurden.

3. Mustervergleichsprogramm zum Vergleichen und Kollatieren einer Grafikform, die zu überprüfen ist, und einer Modellgrafikform als einer Grafikform, aufgrund derer ein Vergleich durchgeführt wird, mit den Funktionen:

einer Deformationsabschätzfunktion des Paarens von Merkmalspunkten in jeder der zu prüfenden Grafikform, die eine Grafikform als ein Objekt der Überprüfung ist, und der Modellgrafikform als einer Grafikform, worauf basierend ein Vergleich zwischen denen eine Differenz in der Merkmalsquantität klein ist, die einen Grad von Merkmalen an den Merkmalspunkten angibt, und Abschätzen der Deformation, die die gepaarten Merkmalspunkte am besten anpasst, als Deformation, die in der zu prüfenden Grafikform erzeugt wird, die am besten Korrespondenzen zwischen den jeweiligen Merkmalspunkten anpasst,
einer Deformationskorrekturfunktion der Korrektur der Deformation, die in der zu prüfenden Grafikform erzeugt wird, basierend auf Informationen über die Deformation, die durch die Deformationsabschätzfunktion abgeschätzt wurde,
einer Ähnlichkeitsbestimmungsfunktion des Vergleichs der zu prüfenden Grafikform, deren Grafikform korrigiert wurde, und der Modellgrafikform, um Ähnlichkeit zu berechnen,
**dadurch gekennzeichnet, dass**
in der Deformationsabschätzfunktion
Berechnen der erforderlichen elastischen Energie für die Deformation, die in der zu prüfenden Grafikform erzeugt wird, die die Differenz der entsprechenden Merkmalspunkte minimal macht, und
Berechnen der Deformation durch Verwendung der elastischen Energie,
wobei der Umwandlungsausdruck, der eine Position eines Merkmalspunktes der zu prüfenden Grafikform mit einer Position eines Merkmalspunkts der Modellgrafikform anpasst, erhalten wird, Parameter zum Ausdrücken von Kontraktion/Expansion und Scherverzerrung basierend auf dem Koeffizienten des Umwandlungsausdruckkes erhalten werden, die elastische Energie als die Summe der Energie von Kontraktion/Expansion und der Energie der Scherverzerrung durch Verwendung von Parametern für den Ausdruck von Kontraktion/Expansion und Scherverzerrung ausgedrückt wird,
wobei, wenn die Deformation, die in der zu prüfenden Grafikform erzeugt wird, durch die im folgenden Ausdruck ausgedrückt wird (hier sind Koordinaten an einem Merkmalspunkt der Modellkraftform als (x, y) bezeichnet und Koordinaten an einem Merkmalspunkt der zu prüfenden Grafikform als (X, Y)),

$$\begin{pmatrix} X \\ Y \end{pmatrix} = A \begin{pmatrix} x \\ y \end{pmatrix} + b$$

ein Parameter $\lambda 0$ entsprechend der Kontraktion/Expansion durch den folgenden Ausdruck ausgedrückt wird, und

$$\lambda_0 = \frac{1}{4}\left\{ \mathrm{tr} A^\top A \begin{pmatrix} 1 & 0 \\ 0 & 1 \end{pmatrix} - 2 \right\}$$

Parameter λ1 und λ2 entsprechend der Scherverzerrung durch die folgenden Ausdrücke ausgedrückt werden,

$$\lambda_1 = \frac{1}{4}\mathrm{tr}A^{\top}A\begin{pmatrix} 1 & 0 \\ 0 & -1 \end{pmatrix}$$

$$\lambda_2 = \frac{1}{4}\mathrm{tr}A^{\top}A\begin{pmatrix} 0 & 1 \\ 1 & 0 \end{pmatrix}$$

die elastische Energie durch den folgenden Ausdruck unter Verwendung einer Umgebungskompressionsrate und einer Scherrate $\mu$ ausgedrückt werden

$$F = 2K\lambda_0^2 + 2\mu\left(\lambda_1^2 + \lambda_2^2\right)$$

wobei die Deformationsabschätzfunktion
die Angemessenheit der abgeschätzten Deformation dadurch verifiziert, ob der Maßstab der Deformation größer ist als ein vorgegebener Wert,
falls der Maßstab der Deformation größer ist als der vorgegebene Wert, die momentane Deformation zurückgewiesen wird und die Informationseinrichtung (11) erneut den Maßstab der Deformation berechnet, nachdem die Merkmalspunkte der Grafikform mit den Merkmalspunkten der Modellgrafikform erneut gepaart wurden.

## Revendications

1.  Dispositif de collationnement de motifs pour comparer et collationner une forme graphique à examiner et une forme graphique de modèle en tant que forme graphique sur la base de laquelle une comparaison est effectuée, comprenant :

    des moyens d'estimation de déformation (11) pour apparier des points de caractéristique dans chacune de ladite forme graphique à examiner qui est une forme graphique en tant qu'objet d'examen et de ladite forme graphique de modèle en tant que forme graphique sur la base de laquelle une comparaison entre lesquels une différence de quantité de caractéristiques indicative d'un degré de caractéristiques audit point de caractéristique est faible, et estimer la déformation qui fait que les points de caractéristique appariés sont les mieux appariés en tant que déformation générée dans ladite forme graphique à examiner qui apparient le mieux les correspondances entre lesdits points de caractéristique respectifs,
    des moyens de correction de déformation (12) pour corriger la déformation générée dans la forme graphique à examiner sur la base d'informations concernant la déformation estimée par lesdits moyens d'estimation de déformation (11),
    des moyens de détermination de similarité (13) pour comparer ladite forme graphique à examiner dont la déformation est corrigée et ladite forme graphique de modèle pour calculer une similarité,
    **caractérisé en ce que** lesdits moyens d'estimation de déformation (11)
    calculent l'énergie élastique nécessaire pour la déformation générée dans ladite forme graphique à examiner qui rend la différence entre les points de caractéristique correspondants minimum, et
    estiment la déformation en utilisant ladite énergie élastique,
    dans lequel l'expression de conversion qui fait correspondre une position d'un point de caractéristique de la forme graphique à examiner avec une position d'un point de caractéristique de la forme graphique de modèle est obtenue, des paramètres pour exprimer une contraction/extension et une distorsion par cisaillement sont obtenus sur la base du coefficient de l'expression de conversion, ladite énergie élastique est exprimée en tant que somme de l'énergie de contraction/extension et de l'énergie de distorsion par cisaillement en utilisant les paramètres pour exprimer une contraction/extension et une distorsion par cisaillement,

dans lequel, lorsque la déformation générée dans la forme graphique à examiner est exprimée par l'expression suivante (ici, les coordonnées en un point de caractéristique de la forme graphique de modèle sont désignées par (x, y) et les coordonnées en un point de caractéristique de la forme graphique à examiner par (X, Y)).

$$\begin{pmatrix} X \\ Y \end{pmatrix} = A \begin{pmatrix} x \\ y \end{pmatrix} + b$$

un paramètre $\lambda 0$ correspondant à une contraction/extension est exprimé par l'expression suivante, et

$$\lambda_0 = \frac{1}{4} \left\{ \mathrm{tr} A^\top A \begin{pmatrix} 1 & 0 \\ 0 & 1 \end{pmatrix} - 2 \right\}$$

des paramètres $\lambda 1$ et $\lambda 2$ correspondant à une distorsion par cisaillement sont exprimés par les expressions suivantes,

$$\lambda_1 = \frac{1}{4} \mathrm{tr} A^\top A \begin{pmatrix} 1 & 0 \\ 0 & -1 \end{pmatrix}$$

$$\lambda_2 = \frac{1}{4} \mathrm{tr} A^\top A \begin{pmatrix} 0 & 1 \\ 1 & 0 \end{pmatrix}$$

ladite énergie élastique est exprimée par l'expression suivante en utilisant un taux de compression environnant K et un taux de cisaillement $\mu$

$$F = 2K\lambda_0^2 + 2\mu \left( \lambda_1^2 + \lambda_2^2 \right)$$

et

dans lequel lesdits moyens d'estimation de déformation (11)

vérifient l'adéquation de la déformation estimée selon que l'ampleur de la déformation est supérieure ou non à une valeur prédéterminée,

si l'ampleur de la déformation est supérieure à la valeur prédéterminée, la déformation actuelle est rejetée et les moyens de déformation (11) estiment de nouveau l'ampleur de la déformation après avoir apparié d'une manière différente les points de caractéristique de la forme graphique avec les points de caractéristique de la forme graphique de modèle.

**2.** Procédé de collationnement de motifs pour comparer et collationner une forme graphique à examiner et une forme graphique de modèle en tant que forme graphique sur la base de laquelle une comparaison est effectuée, comprenant les étapes de :

une étape d'estimation de déformation pour apparier des points de caractéristique dans chacune de ladite forme graphique à examiner qui est une forme graphique en tant qu'objet d'examen et de ladite forme graphique de modèle en tant que forme graphique sur la base de laquelle une comparaison entre lesquels une différence de quantité de caractéristiques indicative d'un degré de caractéristiques audit point de caractéristique est faible, et estimer la déformation qui fait que les points de caractéristique appariés sont les mieux appariés en tant que déformation générée dans ladite forme graphique à examiner qui apparient le mieux les correspondances entre lesdits points de caractéristique respectifs,
une étape de correction de déformation pour corriger la déformation générée dans la forme graphique à examiner sur la base d'informations concernant la déformation estimée par ladite étape d'estimation de déformation,
une étape de détermination de similarité pour comparer ladite forme graphique à examiner dont la déformation est corrigée et ladite forme graphique de modèle pour calculer une similarité,
**caractérisé en ce que**
dans ladite étape d'estimation de déformation,
calcule l'énergie élastique nécessaire pour la déformation générée dans ladite forme graphique à examiner qui rend la différence des points de caractéristique correspondants minimum, et
estime la déformation en utilisant ladite énergie élastique,
dans lequel l'expression de conversion qui fait correspondre une position d'un point de caractéristique de la forme graphique à examiner avec une position d'un point de caractéristique de la forme graphique de modèle est obtenue, des paramètres pour exprimer une contraction/extension et une distorsion par cisaillement sont obtenus sur la base du coefficient de l'expression de conversion, ladite énergie élastique est exprimée en tant que somme de l'énergie de contraction/extension et de l'énergie de distorsion par cisaillement en utilisant les paramètres pour exprimer une contraction/extension et une distorsion par cisaillement,
dans lequel, lorsque la déformation générée dans la forme graphique à examiner est exprimée par l'expression suivante (ici, les coordonnées en un point de caractéristique de la forme graphique de modèle sont désignées par (x, y) et les coordonnées en un point de caractéristique de la forme graphique à examiner par (X, Y)),

$$\begin{pmatrix} X \\ Y \end{pmatrix} = A \begin{pmatrix} x \\ y \end{pmatrix} + b$$

un paramètre $\lambda 0$ correspondant à une contraction/extension est exprimé par l'expression suivante, et

$$\lambda_0 = \frac{1}{4}\left\{ \mathrm{tr}A^\top A \begin{pmatrix} 1 & 0 \\ 0 & 1 \end{pmatrix} - 2 \right\}$$

des paramètres $\lambda 1$ et $\lambda 2$ correspondant à une distorsion par cisaillement sont exprimés par les expressions suivantes,

$$\lambda_1 = \frac{1}{4}\mathrm{tr}A^\top A \begin{pmatrix} 1 & 0 \\ 0 & -1 \end{pmatrix}$$

$$\lambda_2 = \frac{1}{4} \mathrm{tr} A^\top A \begin{pmatrix} 0 & 1 \\ 1 & 0 \end{pmatrix}$$

ladite énergie élastique est exprimée par l'expression suivante en utilisant un taux de compression environnant K et un taux de cisaillement $\mu$

$$F = 2K\lambda_0^2 + 2\mu\left(\lambda_1^2 + \lambda_2^2\right)$$

et

dans lequel ladite étape d'estimation de déformation

vérifie l'adéquation de la déformation estimée selon que l'ampleur de la déformation est supérieure ou non à une valeur prédéterminée,

si l'ampleur de la déformation est supérieure à la valeur prédéterminée, la déformation actuelle est rejetée et les moyens de déformation (11) estiment de nouveau l'ampleur de la déformation après avoir apparié d'une manière différente les points de caractéristique de la forme graphique avec les points de caractéristique de la forme graphique de modèle.

3. Programme de collationnement de motifs pour comparer et collationner une forme graphique à examiner et une forme graphique de modèle en tant que forme graphique sur la base de laquelle une comparaison est effectuée en commandant un ordinateur, comprenant les fonctions de :

une fonction d'estimation de déformation pour apparier des points de caractéristique dans chacune de ladite forme graphique à examiner qui est une forme graphique en tant qu'objet d'examen et de ladite forme graphique de modèle en tant que forme graphique sur la base de laquelle une comparaison entre lesquels une différence de quantité de caractéristiques indicative d'un degré de caractéristiques audit point de caractéristique est faible, et estimer la déformation qui fait que les points de caractéristique appariés sont les mieux appariés en tant que déformation générée dans ladite forme graphique à examiner qui apparient le mieux les correspondances entre lesdits points de caractéristique respectifs,

une fonction de correction de déformation pour corriger la déformation générée dans la forme graphique à examiner sur la base d'informations concernant la déformation estimée par ladite fonction d'estimation de déformation,

une fonction de détermination de similarité pour comparer ladite forme graphique à examiner dont la déformation est corrigée et ladite forme graphique de modèle pour calculer une similarité,

**caractérisé en ce que**

ladite fonction d'estimation de déformation

calcule l'énergie élastique nécessaire pour la déformation générée dans ladite forme graphique à examiner qui rend la différence des points de caractéristique correspondants minimum, et

estime la déformation en utilisant ladite énergie élastique, dans lequel l'expression de conversion qui fait correspondre une position d'un point de caractéristique de la forme graphique à examiner et une position d'un point de caractéristique de la forme graphique de modèle est obtenue, des paramètres pour exprimer une contraction/extension et une distorsion par cisaillement sont obtenus sur la base du coefficient de l'expression de conversion, ladite énergie élastique est exprimée en tant que somme de l'énergie de contraction/extension et de l'énergie de distorsion par cisaillement en utilisant les paramètres pour exprimer une contraction/extension et une distorsion par cisaillement,

dans lequel, lorsque la déformation générée dans la forme graphique à examiner est exprimée par l'expression suivante (ici, les coordonnées en un point de caractéristique de la forme graphique de modèle sont désignées par (x, y) et les coordonnées en un point de caractéristique de la forme graphique à examiner par (X, Y)),

$$\begin{pmatrix} X \\ Y \end{pmatrix} = A \begin{pmatrix} x \\ y \end{pmatrix} + b$$

un paramètre λ0 correspondant à une contraction/extension est exprimé par l'expression suivante, et

$$\lambda_0 = \frac{1}{4} \left\{ \mathrm{tr} A^\top A \begin{pmatrix} 1 & 0 \\ 0 & 1 \end{pmatrix} - 2 \right\}$$

des paramètres λ1 et λ2 correspondant à une distorsion par cisaillement sont exprimés par les expressions suivantes,

$$\lambda_1 = \frac{1}{4} \mathrm{tr} A^\top A \begin{pmatrix} 1 & 0 \\ 0 & -1 \end{pmatrix}$$

$$\lambda_2 = \frac{1}{4} \mathrm{tr} A^\top A \begin{pmatrix} 0 & 1 \\ 1 & 0 \end{pmatrix}$$

ladite énergie élastique est exprimée par l'expression suivante en utilisant un taux de compression environnant K et un taux de cisaillement μ

$$F = 2K\lambda_0^2 + 2\mu \left( \lambda_1^2 + \lambda_2^2 \right)$$

et
dans lequel ladite fonction d'estimation de déformation
vérifie l'adéquation de la déformation estimée selon que l'ampleur de la déformation est supérieure ou non à une valeur prédéterminée,
si l'ampleur de la déformation est supérieure à la valeur prédéterminée, la déformation actuelle est rejetée et les moyens de déformation (11) estiment de nouveau l'ampleur de la déformation après avoir apparié d'une manière différente les points de caractéristique de la forme graphique avec les points de caractéristique de la forme graphique de modèle.

# FIG. 1

# FIG. 2

START

TO INPUT GRAPHIC FORM — 201

TO ESTIMATE DEFORMATION — 202

TO CORRECT DEFORMATION — 203

TO CALCULATE SIMILARITY — 204

TO OUTPUT — 205

END

# FIG. 3

# FIG. 4

# FIG. 5

# FIG. 6

# FIG. 7

# FIG. 8

# FIG. 9

# FIG.10

# FIG.11

# FIG.12

# FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI10240932 B
- JP HEISEI10105703 B
- JP HEISEI02187885 B
- JP HEISEI05081412 B
- JP HEISEI06004671 B
- JP HEISEI08030783 B
- JP HEISEI08147411 B

**Non-patent literature cited in the description**

- **Almansa ; Cohen.** *Fingerprint image matching by minimization of thin-plate energy using a two-step algorithm with auxiliary variables,* 2000